# EUROPÄISCHE PATENTSCHRIFT

(11) **EP 2 569 813 B1**
(45) Veröffentlichungstag und Bekanntmachung des Hinweises auf die Patenterteilung: **19.04.2017**
(21) Anmeldenummer: 11723018.5
(22) Anmeldetag: 11.05.2011
(51) Int. Cl.: H01M 4/1395, H01M 4/36, H01M 10/052, H01M 4/38, H01M 4/134, H01M 4/133, H01M 4/1393

(54) **MATERIAL FÜR NEGATIVE ELEKTRODEN UND NEGATIVE ELEKTRODEN SOWIE BATTERIEN UMFASSEND DIESES MATERIAL UND VERFAHREN ZUR HERSTELLUNG DES MATERIALS**
MATERIAL FOR NEGATIVE ELECTRODES, AND NEGATIVE ELECTRODES AND BATTERIES COMPRISING SAID MATERIAL, AND METHOD FOR PRODUCING THE MATERIAL
MATÉRIAU POUR ÉLECTRODES NÉGATIVES ET ÉLECTRODES NÉGATIVES ET BATTERIES COMPRENANT CE MATÉRIAU ET PROCÉDÉ DE FABRICATION DU MATÉRIAU

(30) Priorität: 11.05.2010 AT 7982010
(43) Veröffentlichungstag der Anmeldung: 20.03.2013
(73) Patentinhaber: Samsung SDI Co., Ltd., Yongin-si, Gyeonggi-do (KR)
(72) Erfinder: BAYER, Cornelia, A-8010 Graz (AT); STANGL, Christoph, A-8700 Leoben (AT); GOD, Colin, A-8010 Graz (AT); KOLLER, Stefan, A-8521 Wettmannstätten (AT); HOCHGATTERER, Nikolaus, A-8010 Graz (AT); KREIMAIER, Heimo, A-8042 Graz (AT); STABENTHEINER, Gabriel, A-8141 Zettling (AT)
(74) Vertreter: Gulde & Partner
(86) Internationale Anmeldenummer: PCT/EP2011/057596
(87) Internationale Veröffentlichungsnummer: WO 2011/141501

(56) Entgegenhaltungen:
- WO-A1-2008/106280
- US-B1- 6 235 427
- US-B1- 6 300 013

## Beschreibung

Die Erfindung betrifft ein Material für eine Batterie oder einen Akkumulator, insbesondere für eine negative Elektrode eines Akkumulators, beispielsweise einer Lithium-Ionen-Sekundärbatterie.

Des Weiteren betrifft die Erfindung eine Verwendung eines solchen Materials.

Darüber hinaus betrifft die Erfindung eine Elektrode mit einem derartigen Material.

Ferner betrifft die Erfindung eine Batterie oder einen Akkumulator umfassend eine Elektrode mit einem solchen Material.

Schließlich betrifft die Erfindung ein Verfahren zur Herstellung eines Materials für eine Batterie oder einen Akkumulator, insbesondere für eine negative Elektrode eines Akkumulators, beispielsweise einer Lithium-Ionen-Sekundärbatterie.

Lithium-Ionen-Sekundärbatterien werden in vielen elektrisch betriebenen Geräten, insbesondere des täglichen Lebensbedarfs, eingesetzt, um eine Energieversorgung sicherzustellen. In den letzten Jahren haben Lithium-Ionen-Sekundärbatterien insbesondere im Bereich portabler Elektronikgeräte mehr und mehr bis dahin eingesetzte Sekundärbatterien verdrängt. Grund hierfür ist, dass Lithium-Ionen-Sekundärbatterien eine hohe Energiedichte aufweisen können.

Für negative Elektroden von Lithium-Ionen-Sekundärbatterien wird vornehmlich Kohlenstoff als Wirtmaterial eingesetzt. Der Kohlenstoff kann beispielsweise als sogenannter Leitruß oder als (ebenfalls leitfähiger) Grafit vorliegen. Kohlenstoff in Form von Leitruß oder Grafit zeichnet sich vor allem dadurch aus und wird deswegen verwendet, weil Kohlenstoff bei der reversiblen Interkalation von Lithium bei Lade- bzw. Entladevorgängen nur sehr geringe Volumenänderungen aufweist. Ein wichtiger Nachteil der Verwendung von Kohlenstoff ist jedoch, dass eine maximale Kapazität von beispielsweise Grafit auf etwa 372 mAh/g beschränkt ist.

In Anbetracht der durch Kohlenstoff bzw. Leitruß oder Grafit gegebenen Beschränkungen ist man bestrebt, alternative Materialien für negative Elektroden von Lithium-Ionen-Sekundärbatterien zu finden bzw. bekannte zu optimieren. Diesbezüglich ist in der WO 2005/096414 A2 vorgeschlagen, neben einem üblichen Binder bzw. Bindemittel nanoskalige Siliciumpartikel einzusetzen. Silicium kann in hohem Maß Lithium binden, was eine hohe theoretische spezifische Kapazität ergibt. Allerdings unterliegt Silicium bei der reversiblen Aufnahme von Lithium einer starken Volumenänderung, was nachteilig ist. In der WO 2005/096414 A2 wird daher vorgeschlagen, nanoskalige Siliciumpartikel zur Herstellung eines Materials für eine negative Elektrode einzusetzen. Dadurch soll eine ausreichende Stabilität des Elektrodenmaterials bei reversibler Ein- bzw. Auslagerung von Lithium bei geringen irreversiblen Kapazitätsverlusten sichergestellt sein. Allerdings haben Untersuchungen gezeigt, dass eine Zyklenstabilität nur bei geringen Strombelastungen der Elektrode erreicht wird. Bei sogenannten Konstantstromzyklisierungen mit höheren Strombelastungen tritt nach wenigen Zyklen ein starker Abfall der Kapazität auf.

Bekannt ist auch ein Einsatz von Legierungen von Silicium als elektroaktives Material in negativen Elektroden für Lithium-Ionen-Sekundärbatterien, beispielsweise aus der US 2009/0061322 A1. Dabei können Silicium-Titan-Legierungen oder auch Legierungen von Silicium mit Kupfer oder andere Silicium-Legierungen eingesetzt werden. Zusätzlich ist das Silicium in diesen Legierungen beispielsweise mit Bor, Aluminium oder Gallium dotiert. Ein Nachteil dieser Materialien ist die aufwendige Herstellung bzw. die erforderliche Dotierung des Materials.

Silicium wird auch gemäß der US 6,300,013 B1 als elektroaktives Material in negativen Elektroden für Lithium-Ionen-Sekundärbatterien eingesetzt. Dabei liegt Silicium in Form von Silicium-Legierungen vor, insbesondere Legierungen im Legierungssystem Silicium-Magnesium. Diese Legierungen unterliegen aber wohl auch einer relativ großen Volumenänderung beim reversiblen Ein- bzw. Auslagern von Lithium, weshalb gleichzeitig ein hoher Kohlenstoffanteil von mehr als 50 Gewichtsprozent (Gew.-%) zwingend vorgesehen ist, um eine Volumenänderung abzupuffern.
Ein Hinweis auf positive Wirkungen von Natrium und/oder Kalium ist der US 6,300,013 B1 nicht zu entnehmen.

Aufgabe der Erfindung ist es, ein Material der eingangs genannten Art anzugeben, mit welchem eine reversible Ein- und Auslagerung von Lithium über einen längeren Zeitraum hinweg gewährleistet werden kann, was einer stabilbleibenden Kapazität entspricht.

Eine weitere Aufgabe der Erfindung ist es, eine Verwendung eines solchen Materials darzustellen.

Eine noch weitere Aufgabe der Erfindung ist es, eine Elektrode bereitzustellen, mit welcher eine reversible Ein- und Auslagerung von Lithium über einen längeren Zeitraum hinweg gewährleistet werden kann, was einer stabilbleibenden Kapazität entspricht.

Ferner ist es eine Aufgabe der Erfindung, eine Batterie oder einen Akkumulator anzugeben, dessen Elektrode eine reversible Ein- und Auslagerung von Lithium über einen längeren Zeitraum hinweg gewährleistet, was einer stabilbleibenden Kapazität entspricht.

Schließlich ist es eine Aufgabe der Erfindung, ein Verfahren der eingangs genannten Art anzugeben, mit welchem ein Material herstellbar ist, das eine reversible Ein- und Auslagerung von Lithium über einen längeren Zeitraum hinweg gewährleistet, was einer stabilbleibenden Kapazität entspricht.

Die erstgenannte Aufgabe wird durch ein Material der eingangs genannten Art gelöst, umfassend oder bestehend aus:
a) Kohlenstoff;
b) einer Legierung und/oder einem Gemisch aus Silicium mit zumindest einem der Elemente Natrium oder Kalium und optional zumindest einem weiteren metallischen Element sowie herstellungsbedingten Verunreinigungen, wobei im Falle eines Gemisches die Elemente innerhalb einer Siliciumphase verteilt sind;
c) einen Binder, der Kohlenstoff und die Legierung und/oder das Gemisch zu einem festen Material bindet.

Ein mit der Erfindung erzielter Vorteil ist darin zu sehen, dass eine oftmalige reversible Ein- und Auslagerung von Lithium bzw. eine stabilbleibende Kapazität bei Einsatz des Materials als Elektrodenmaterial, insbesondere für eine negative Elektrode einer Lithium-Ionen-Sekundärbatterie, gewährleistet ist. Überraschenderweise hat sich gezeigt, dass eine Umsetzung von hochreinem Silicium mit zumindest einem der Elemente Natrium oder Kalium zu einer Legierung oder gegebenenfalls zu einem Gemisch führt, die bzw. das auch bei höheren Strombelastungen bzw. einer Konstantstromzyklisierung bei hohen Kapazitäten bei beispielsweise 50 Zyklen eine im Wesentlichen konstante Kapazität hat. Überraschenderweise hat sich diesbezüglich in Versuchen auch gezeigt, dass entsprechend günstige Ergebnisse mit Elementen der 2. Hauptgruppe des Periodensystems der Elemente als Bestandteil der Legierung bzw. des Gemisches nicht erhalten werden konnten. Gleichwohl können zumindest in geringeren Mengen auch Elemente der 2. Hauptgruppe des Periodensystems der Elemente sowie optional weitere metallische Elemente in der Legierung und/oder dem Gemisch vorliegen. Daneben können auch mit der Herstellung des Siliciums verbundene herstellungsbedingte Verunreinigungen vorliegen, die an sich nicht störend sind.

Wesentlich im Rahmen der Erfindung ist es, dass die Elemente Natrium oder Kalium mit dem Silicium eine Legierung bilden und/oder als Gemisch mit Silicium vorliegen. Im Falle eines Gemisches sind die Elemente Natrium oder Kalium innerhalb einer Siliciumphase verteilt.

Silicium, das mit Natrium und/oder Kalium umgesetzt worden ist, führt bei Einsatz in einem erfindungsgemäßen Material zu hohen und bei wiederholter Ein- und Auslagerung von Lithium im Wesentlichen stabilbleibenden Kapazitäten auch bei einer Vielzahl von Zyklen.

Zweckmäßig ist es, dass das zumindest eine Element Natrium oder Kalium in der Legierung und/oder dem Gemisch in einem Anteil von weniger als 50 Gew.-% vorliegt, damit die mit dem Silicium assoziierten Wirkungen möglichst vollständig zur Geltung kommen können. Insbesondere kann auch vorgesehen sein, dass das zumindest eine Element Natrium oder Kalium in der Legierung und/oder dem Gemisch in einem Anteil von weniger als 40 Gew.-%, bevorzugt weniger als 25 Gew.-%, oder auch weniger als 10 Gew.-% vorliegt. Insgesamt hat sich gezeigt, dass bereits geringe Gehalte an Natrium und/oder Kalium in der Legierung und/oder dem Gemisch ausreichend sind, um hohe und stabilbleibende Kapazitäten bei wiederholter Ein- und Auslagerung von Lithium zu erreichen. Zugleich ist bei geringen Anteilen von Natrium und/oder Kalium in der Legierung und/oder dem Gemisch ein hoher Siliciumgehalt gegeben, was ebenfalls von Vorteil ist. Es empfiehlt sich daher, dass das zumindest eine Element Natrium oder Kalium in der Legierung und/oder dem Gemisch in einem Anteil von weniger als 5 Gew.-%, insbesondere weniger als
1,0 Gew.-% vorliegt.

Die Legierung und/oder das Gemisch, die bzw. das in der Regel Silicium als Hauptbestandteil enthält, liegt vorzugsweise in der Form von Partikeln vor, was sich einerseits aus der Herstellung ergibt, beispielsweise durch Bedampfen von Siliciumpartikeln, und andererseits eine einfache Weiterverarbeitung mit den übrigen Bestandteilen des erfindungsgemäßen Materials erlaubt. Dabei beträgt eine durchschnittliche Partikelgröße der Partikel mit Vorteil weniger als 500 nm. Besonders bevorzugt ist es aus Sicht der Herstellung einer homogenen Legierung bzw. eines homogenen Gemisches, das die Partikel eine durchschnittliche Partikelgröße von weniger als 200 nm aufweisen.

Ein Kohlenstoffanteil im erfindungsgemäßen Material kann grundsätzlich beliebig sein und z. B. bis zu 95 Gew.-% betragen. Da es einerseits allerdings nicht erforderlich ist, einen hohen Kohlenstoffanteil vorzusehen, um eine allfällige Volumenänderung anderer Bestandteile des Materials abzupuffern, und andererseits ein Legierungs- und/oder Gemischanteil zwecks hoher elektrochemischer Aktivität möglichst groß sein sollte, ist mit Vorteil vorgesehen, dass ein Kohlenstoffanteil weniger als 40 Gew.-%, bevorzugt weniger als 25 Gew.-%, insbesondere etwa 5 bis 15 Gew.-%, beträgt.

Der Kohlenstoff kann in beliebiger Form eingesetzt werden, wie es an sich aus dem Stand der Technik bekannt ist. Zweckmäßigerweise liegt der Kohlenstoff als (Leit-)Ruß, Grafit oder als sogenannter Hard Carbon vor.

In einem erfindungsgemäßen Material kann auch ein Binderanteil auf relativ geringe Gehalte eingestellt werden. Mit Vorteil beträgt ein Binderanteil weniger als 20 Gew.-%, bevorzugt etwa 3 bis 13 Gew.-%.

Besonders bevorzugt ist es, dass der Binder ein Polysaccharid ist. Es hat gezeigt, dass ein Polysaccharid, insbesondere Natriumcarboxymethylcellulose oder gegebenenfalls auch ein anderes Cellulose-Derivat, eine hohe Wechselwirkung mit Siliciumpartikeln, insbesondere unter Ausbildung kovalenter Bindungen, eingehen kann. Dies fördert die Herstellung eines erfindungsgemäßen Materials in fester Form mit geringen Binderanteilen und dennoch hoher Stabilität des Materials im Einsatz. Möglich ist auch ein alternativer oder gleichzeitiger Einsatz eines Binders, der üblicherweise in positiven Elektroden solcher Sekundärbatterien eingesetzt wird, z. B. ein Styrol-Butadien-Kautschuk (Styrene-Butadiene-Rubber, SBR).

Die weitere Aufgabe der Erfindung wird durch die Verwendung eines erfindungsgemäßen Materials als Elektrodenmaterial in Lithium-Ionen-Sekundärbatterien gelöst.

Die Aufgabe der Bereitstellung einer Elektrode der eingangs genannten Art, die bei einer reversiblen Ein- und Auslagerung von Lithium über einen längeren Zeitraum eine stabilbleibende Kapazität aufweist, wird gelöst, wenn die Elektrode ein erfindungsgemäßes Material umfasst.

Die Aufgabe der Bereitstellung einer Batterie oder eines Akkumulators mit stabilbleibender Kapazität auch bei wiederholter Ein- und Auslagerung von Lithium wird durch eine Batterie oder einen Akkumulator mit einer erfindungsgemäßen Elektrode gelöst.

Die verfahrensmäßige Aufgabe der Erfindung wird gelöst, wenn ein Verfahren der eingangs genannten Art folgende Schritte umfasst:
a) Bereitstellung von Kohlenstoff;
b) Bereitstellung einer Legierung und/oder eines Gemisches aus Silicium mit zumindest einem der Elemente Natrium oder Kalium und optional zumindest einem weiteren metallischen Element sowie herstellungsbedingten Verunreinigungen; wobei im Falle eines Gemisches die Elemente innerhalb einer Siliciumphase verteilt sind;
c) Bereitstellung eines Binders, der Kohlenstoff und die Legierung und/oder das Gemisch zu einem festen Material bindet;
d) Vermengen der gemäß den Schritten a) bis c) bereitgestellten Komponenten und optional thermisches und/oder mechanisches Behandeln, um das Material in fester Form zu bilden.

Ein mit einem erfindungsgemäßen Verfahren erzielter Vorteil ist darin zu sehen, dass auf einfache Weise ein Material für eine Elektrode, insbesondere eine negative Elektrode einer Lithium-Ionen-Sekundärbatterie, bereitgestellt werden kann, das eine stabile und hohe Kapazität bei wiederholter Ein- und Auslagerung von Lithium erbringt.

Bevorzugt ist vorgesehen, dass Partikel aus Silicium mit einer durchschnittlichen Partikelgröße von weniger als 500 nm mit zumindest einem Element Natrium oder Kalium behandelt werden, um die Legierung und/oder das Gemisch bereitzustellen. Bevorzugt ist vorgesehen, dass die eingesetzten Partikel eine durchschnittliche Partikelgröße von weniger als 200 nm aufweisen. Aus Siliciumpartikeln mit geringer durchschnittlicher Partikelgröße lassen sich Legierungen bzw. Gemische erstellen, in welchen die eingebrachten Elemente Natrium oder Kalium homogen verteilt vorliegen. Detailliertere Untersuchungen zur Mikrostruktur entsprechender Legierungen und/oder Gemische stehen zwar noch aus, es wird jedoch vermutet, dass sich eine homogene Mikrostruktur auch günstig auf die makroskopisch feststellbaren physikalischen Größen, beispielsweise hohe und stabilbleibende Kapazität bei wiederholter Ein- und Auslagerung von Lithium, günstig auswirkt.

Die Legierung und/oder das Gemisch kann grundsätzlich auf beliebige Weise hergestellt werden. Beispielsweise ist es möglich, von Siliciumpartikeln mit einer durchschnittlichen Partikelgröße von weniger als 500 nm auszugehen und diese Partikel in einem Lösungsmittel mit Natrium und/oder Kalium umzusetzen. Auch ist es möglich, die ElementeNatrium oder Kalium bereits bei der Herstellung mit Siliciumpartikeln einzubringen. Bevorzugt ist es jedoch, dass die Legierung und/oder das Gemisch durch Umsetzen von festem Silicium mit zumindest einem bei Umsetzungstemperatur in flüssiger Form vorliegenden Element Natrium oder Kalium der erstellt wird. Die entsprechenden Elemente Natrium oder Kalium weisen durchwegs niedrige Schmelzpunkte auf, sodass eine einfache Verfahrensführung möglich ist, die ein Eindiffundieren von Alkalimetallen in feste Siliciumpartikel ermöglicht.

Vorgesehen sein kann auch, dass die Legierung und/oder das Gemisch durch Umsetzen von festem Silicium mit zumindest einem bei Umsetzungstemperatur gasförmig vorliegenden Element Natrium oder Kalium erstellt wird. In diesem Fall werden beispielsweise Siliciumpartikel mit einer durchschnittlichen Partikelgröße von weniger als 500 nm für eine bestimmte Zeit einem Alkalidampf ausgesetzt, sodass Natrium und/oder Kalium in die Siliciumpartikel diffundieren und dadurch die Legierung und/oder das Gemisch gebildet wird.

Bevorzugt ist aus genannten Gründen vorgesehen, dass die Legierung und/oder das Gemisch mit einem Anteil des zumindest einen Elementes Natrium oder Kalium von weniger als 5 Gew.-%, bevorzugt weniger als 1,0 Gew.-%, erstellt wird.

Des Weiteren ist bevorzugt vorgesehen, dass das Material mit einem Kohlenstoffanteil von weniger als 40 Gew.-%, bevorzugt weniger als 25 Gew.-%, insbesondere etwa 5 bis 15 Gew.-% erstellt wird, da ein Kohlenstoffanteil ohne nachteilige Wirkungen gering gehalten werden kann. Grundsätzlich kann aber ein Kohlenstoffanteil beliebig sein und z. B. bis zu 95 Gew.-% betragen.

Als Binder wird mit Vorteil ein Polysaccharid, insbesondere Natriumcarboxymethylcellulose, eingesetzt. Dabei wird ein Binderanteil mit Vorteil auf weniger als 20 Gew.-%, bevorzugt etwa 3 bis 13 Gew.-%, eingestellt. Ein Polysaccharid bietet als Binder im Zusammenhang mit Siliciumpartikeln mehrere Vorteile. Zum einen können starke Wechselwirkungen, insbesondere kovalente Bindungen, zwischen dem Polysaccharid und einzelnen Siliciumpartikeln ausgebildet werden, was in Bezug auf eine mechanische Stabilität des erstellten Materials günstig ist. Zum anderen kann ein Anteil des Binders relativ gering gehalten werden, wodurch wiederum ein Anteil der elektrochemisch aktiven Legierung bzw. des Gemisches höher sein kann. Darüber hinaus kann eine Verarbeitung der bereitgestellten Komponenten auch in wässriger Phase erfolgen, was eine einfache Verfahrensführung erlaubt. Möglich ist auch ein alternativer oder gleichzeitiger Einsatz eines Binders, der üblicherweise in positiven Elektroden solcher Sekundärbatterien eingesetzt wird, z. B. ein Styrol-Butadien-Kautschuk (Styrene-Butadiene-Rubber, SBR).

Entsprechend den verfahrensmöglichen Vorteilen umfasst ein Verfahren zur Herstellung einer Batterie oder eines Akkumulators bevorzugt ein erfindungsgemäßes Verfahren.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine Transmissionselektronenmikroskop-Aufnahme von Siliciumpartikeln;
Fig. 2 eine schematische Darstellung eines als Binder eingesetzten Polysaccharids mit Siliciumpartikeln;
Fig. 3 ein Diagramm betreffend eine Konstantstromzyklisierung mit einer Elektrode mit Siliciumpartikeln;
Fig. 4 ein Diagramm betreffend eine Konstantstromzyklisierung mit einer Elektrode mit einem erfindungsgemäßen Material;
Fig. 5 ein Zyklovoltammogramm mit einer Elektrode mit Siliciumpartikeln;
Fig. 6 ein Zyklovoltammogramm mit einer Elektrode mit einem erfindungsgemäßen Material.

### 1. Herstellung von elektroaktivem Material

Für die Herstellung von elektroaktiven Materialen für negative Elektroden wurden Siliciumpulver eingesetzt, die Partikel mit einer geringen durchschnittlichen Partikelgröße von weniger als 500 nm aufweisen. Derartige Pulver wurden von der Anmelderin der WO 2005/096414 A2 bezogen. Die eingesetzten Siliciumpulver wurden vor der Verwendung in Argon gelagert, sodass eine Bildung von SiO₂ verhindert werden konnte. Es wurden jedoch bewusst auch Siliciumpulver verwendet, die vor einem Einsatz an Luft gelagert wurden.
Alle Elemente der 1. Hauptgruppe sowie alternative Elemente der 2. Hauptgruppe des Periodensystems der Elemente wurden in handelsüblicher Form eingesetzt.

### 1.1. Arbeitsschritte mit flüssigen Alkalimetallen

Zur Erstellung von elektroaktivem Material durch Umsetzung von Siliciumpulver mit flüssigem Alkalimetall wurde aus dem Siliciumpulver an Luft ein Pellet gepresst. Auf dieses Pellet wurden anteilig rund 10 Gew.-% einer flüssigen Natrium-Kalium-Legierung mit einer Pipette getropft. Anschließend wurde das Pellet in einen Hochtemperatur-Glasrohrofen überführt und nach einer dreimaligen Argonspülung zur Einstellung einer Schutzgasatmosphäre bei einer Temperatur von 800 °C für 24 Stunden wärmebehandelt. Anschließend wurde der Ofen abgekühlt und das Pellet in einem Achat-Mörser so fein wie möglich zermahlen, um in weiterer Folge Pulver für eine Elektrodenpräparation zur Verfügung zu haben.

### 1.2. Arbeitsschritte mit festen Alkalimetallen

Eingesetztes Alkalimetall wurde mechanisch soweit möglich zerkleinert, sofern es nicht ohnedies als Pulver bezogen wurde. Anteilig rund 10 Gew.-% oder weniger des Alkalimetalls wurden in einer Schutzatmosphäre aus Argon in ein Wägeschiffchen eingewogen und mit der ergänzenden Menge an Siliciumpulver durch Schütteln vermischt. Aus dieser Silicium-Alkalimetall-Mischung wurde ein Pellet gepresst, das in einen Hochtemperatur-Glasrohrofen überführt wurde. Anschließend erfolgte eine dreimalige Argonspülung zum Zwecke der Einstellung einer Schutzgasatmosphäre. Danach wurde das Pellet für zwei bis drei Tage einer Wärmebehandlung im Bereich des Schmelzpunktes des Alkalimetalls unterworfen. Dabei wurde sowohl mit geschmolzenem als auch mit unter dem Schmelzpunkt verbleibendem Alkalimetall gearbeitet, wobei im zweiten Fall nur ein geringer Teil zum Dampfdruck beitrug. Nach Abkühlen des Ofens wurde das Pellet in einem Achat-Mörser so fein wie möglich zermahlen, um in weiterer Folge Pulver für eine Elektrodenpräparation zur Verfügung zu haben.

### 1.3. Arbeitsschritte mit gasförmigen Alkalimetallen

Ein in Stücken vorliegendes Alkalimetall wurde mit einem Messer zerkleinert, soweit erforderlich. Anteilig rund 10 Gew.-% Natrium oder ein anderes Alkalimetall mit Ausnahme von Lithium wurden in eine kleine Quarzglas-Eprouvette eingewogen. In einen luftdichten Gaskolben (Volumen ca. 200 ml) wurde die ergänzende Menge an Siliciumpulver eingewogen und die zuvor mit Natrium oder einem anderen Alkalimetall befüllte Eprouvette ebenfalls in den Glaskolben gestellt. Anschließend wurde die Probe in einer Trockenpistole (Glass Oven B580 der Firma Büchi) für 24 Stunden bei einer Temperatur von 300 °C wärmebehandelt. Dies erfolgte, nach einer Spülung mit Argon, unter Vakuum, um eine geeignete Atmosphäre im Glaskolben sicherzustellen. Nach Abkühlen der Trockenpistole wurde das so behandelte Pulver direkt für eine Elektrodenpräparation an Luft verwendet.

### 1.4. Arbeitsschritte mit Erdalkalimetallen

Für eine Präparation mit Erdalkalimetallen wurden die vorstehenden Arbeitsschritte analog angewendet.

### 2. Elektrodenpräparation

Für die Herstellung von 1 g Elektrodenmaterial für eine negative Elektrode einer Lithium-Ionen-Sekundärbatterie wurden typischerweise 75 bis 85 Gew.-% Aktivmaterial bzw. Material wie vorstehend beschrieben eingesetzt. Des Weiteren wurden zur Herstellung des Materials etwa 10 bis 14 Gew.-% Leitruß (kommerziell erhältlich als Super P der Firma Timcal) und 6 bis 10 Gew.-% Binder (beispielsweise Natriumcarboxymethylcellulose der Firma Wolff Cellulosis GmbH & Co. KG) eingesetzt. Als Lösungsmittel diente entionisiertes Wasser. Weiter wurden dem Ansatz zwei Tropfen eines Tensids beigefügt, um eine bessere Verteilung der einzelnen Komponenten zu gewährleisten. Ein derartiger Ansatz wurde rund 12 Stunden mittels Magnetrührer gerührt. Danach wurde die Aufschlämmung mithilfe einer Handrakel auf eine Kupferfolie gerakelt (Nassfilmdicke: 105 µm). Die gerakelten Folien wurden in einem Trockenstrang für ca. vier Stunden bei 50 °C getrocknet. Anschließend wurden mittels eines Locheisens Elektroden ausgestanzt.

### 3. Konstantstromzyklisierunaen/Zyklovoltammetrie

Die wie zuvor beschrieben hergestellten Elektroden wurden durch Konstantstromzyklisierungen und Zyklovoltammetrie im Vergleich mit bekannten Materialien getestet. Als Testzellen für die zyklovoltammetrischen Messungen und Konstantstromzyklisierungen diente eine Swagelok^{®}-Zelle mit folgender Elektrodenanordnung:
Arbeitselektrode: Silicium, modifiziert wie beschrieben (Durchmesser 12 mm)
Gegenelektrode: Lithium-Metall (Durchmesser 12 mm)
Referenzelektrode. Lithium-Metall (rund 3 x 3 mm)
Elektrolyt: 120 µm Ethylencarbonat/Diethylencarbonat im Volumenverhältnis 3:7, 1 M LiPF₆, 2 Gew.-% Vinylencarbonat
Separator: Freudenberg-Vlies FS2190, 6-lagig (Polypropylen, 230 µm, Durchmesser 12 mm), bei Zyklisierung zusätzlich 1 x Celgard 2400 (Polypropylen, 25 µm, Durchmesser 13 mm)

Die Konstantstromzyklisierungen erfolgten in der Art, dass an einer Arbeitselektrode ein konstanter Strom angelegt wurde; dabei wird ein Potenzial der Elektrode in Bezug auf die Referenzelektrode als Funktion der Zeit gemessen. Die Zyklisierungsbedingungen zur Untersuchung einzelner Elektroden waren:
1. Formierung mit 0,1 C bis 0,1 V vs. Li/Li⁺
2. eine Stunde Konstantspannungsladen
3. Entladen mit 0,1 C bis 1 V vs. Li/Li⁺
4. 0,5 C Laden bis 0,1 V vs. Li/Li⁺
5. eine Stunde Konstantspannungsladen
6. 0,5 C Entladen bis 1 V vs. Li/Li⁺

Die Zyklisierungsschritte 4 bis 6 wurden 49 Mal wiederholt.

### 4. Messergebnisse

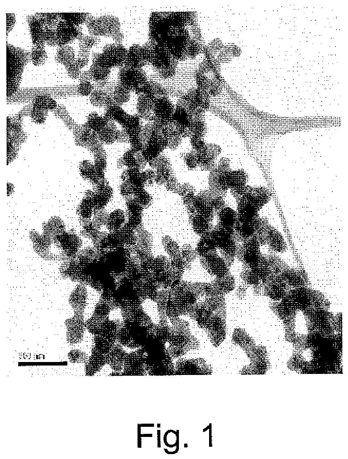

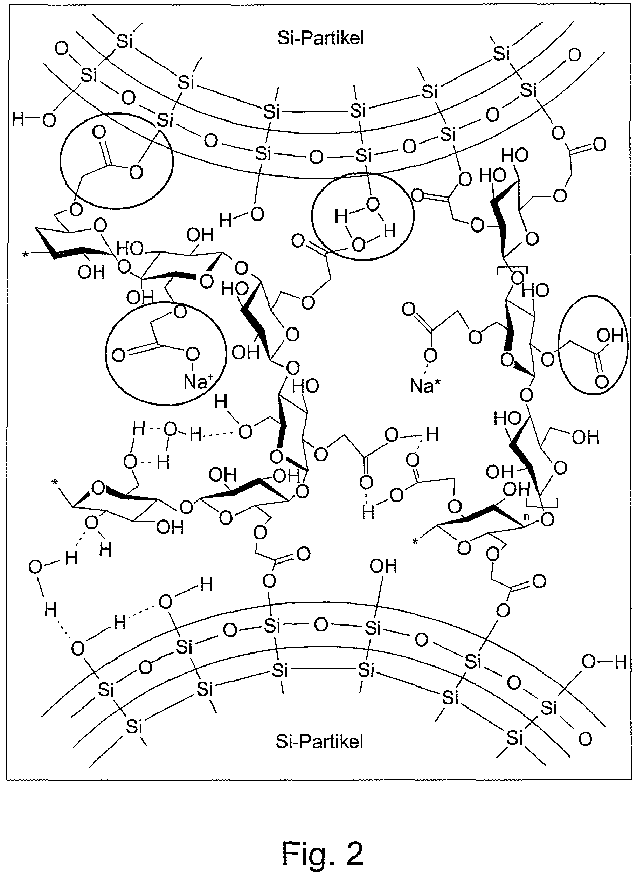

In Fig. 1 ist eine transmissionselektronenmikroskopische Aufnahme von eingesetzten Siliciumpartikeln gezeigt. Wie ersichtlich sind die eingesetzten Siliciumpartikel, die anschließend mit Natrium und/oder Kalium sowie zum Vergleichszweck weiteren Metallen behandelt wurden, mit einer geringen durchschnittlichen Partikelgröße ausgebildet, die deutlich unter 500 nm liegt. Aus diesen Partikeln wurde nach Behandlung wie beschrieben ein Material für eine negative Elektrode einer Lithium-Ionen-Sekundärbatterie hergestellt, wobei als Binder Natriumcarboxymethylcellulose eingesetzt wurde. Dieser Binder ist insofern vorteilhaft, als wie in Fig. 2 dargestellt starke Wechselwirkungen zwischen dem Binder und den einzelnen Siliciumpartikeln gegeben sind. Insbesondere können kovalente Bindungen oder Wasserstoffbrückenbindungen vorliegen.

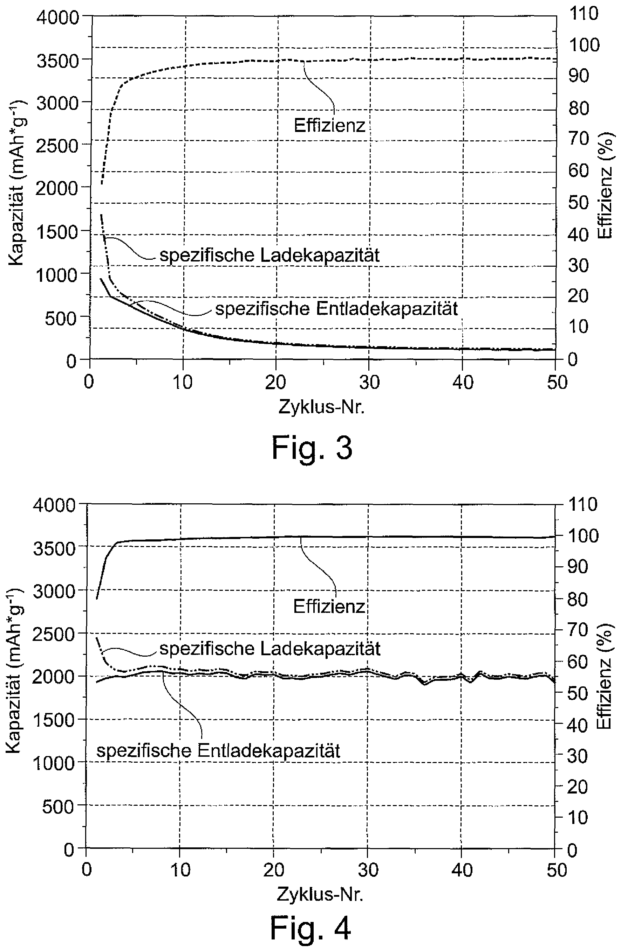

In Fig. 3 ist ein Diagramm betreffend eine Konstantstromzyklisierung dargestellt, wobei die eingesetzte negative Elektrode auf Basis von Siliciumpartikeln gemäß Fig. 1 hergestellt wurde, die Siliciumpartikel wurden jedoch nicht gesondert mit einem Alkalimetall mit Ausnahme von Lithium, beispielsweise Natrium und/oder Kalium behandelt. Wie in Fig. 3 ersichtlich ist, ist bei entsprechender Strombelastung der Elektrode bei mehreren Zyklen ein starker, reproduzierbarer Kapazitätsabfall gegeben. Demgegenüber ist ein derartiger Kapazitätsabfall bei einer Ausbildung einer Elektrode mit einem erfindungsgemäßen Material nicht gegeben, was in Fig. 4 anhand eines Diagrammes veranschaulicht ist. Ein entsprechender Kapazitätsabfall kann in diesem Fall bei mehrfacher Zyklisierung, beispielsweise 50 Zyklen nicht beobachtet werden, was für eine reversible Ein- und Auslagerung von Lithium bei stabilbleibender Kapazität spricht.

Ähnliche Ergebnisse wurden für verschiedene Qualitäten der eingesetzten Siliciumpartikel und verschiedene Alkalimetalle (mit Ausnahme von Lithium) erhalten, was in der nachfolgenden Tabelle 1 dargestellt ist. Dabei wurde im Rahmen von Versuchen überraschenderweise auch gefunden, dass Materialien, bei welchen zur Behandlung der Siliciumpartikel Erdalkalimetalle anstelle der Alkalimetalle eingesetzt wurden, die entsprechenden Wirkungen nicht zeigten.

**Tabelle 1 - In Halbzellen gemessene Kapazitäten (Mittelwert Zyklus 30 bis 40)**

| **Material/Lagerung** | **Kapazität ursprünglich (mAh/g)** | **Element** | **Kapazität behandelt (mAh/g)** |
|---|---|---|---|
| Degussa Si/Schutzgasatmosphäre | ca. 200 | NaK | ca. 900 |
| Degussa Si/Schutzgasatmosphäre | ca. 200 | Na | ca. 2000 |
| Degussa Si/Schutzgasatmosphäre | ca. 200 | Ca | ca. 100 |
| Degussa Si/Schutzgasatmosphäre | ca. 200 | Mg | ca. 100 |
| Degussa Si/Luftlagerung | ca. 400 | Na | ca. 1500 |
| Degussa Si/Luftlagerung | ca. 400 | NaK | ca. 150 |

Weitere Untersuchungen haben gezeigt, dass optimale Mengen der Alkalimetalle wie Natrium und/oder Kalium im Bereich von 0,01 bis 5 Gew.-%, bevorzugt 0,01 bis 1,5 Gew.-%, liegen. Bereits diese geringen Mengen der Alkalimetalle reichen aus, um die gewünschten Wirkungen zu erreichen.

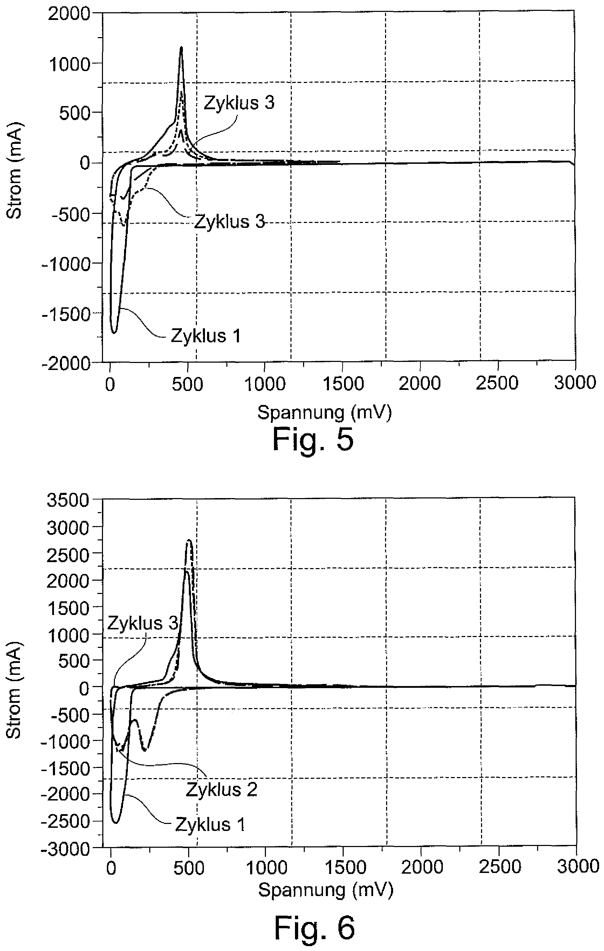

In weiteren Versuchen wurden Elektroden mit Siliciumpartikeln gemäß Fig. 1, jedoch unbehandelt, und im Vergleich dazu Elektroden mit Siliciumpartikeln gemäß Fig. 1, jedoch mit Natriumdampf behandelt, untersucht. Dabei zeigte sich bei der Auswertung der entsprechenden Zyklovoltammogramme, die in Fig. 5 bzw. 6 dargestellt sind, dass sowohl eine Effizienz als auch eine spezifische Entladekapazität bei Elektroden mit einem erfindungsgemäßen Material deutlich höher waren. Die Auswertung der Zyklovoltammogramme belegt somit eine wesentlich bessere Effizienz und höhere Kapazität der mit einem erfindungsgemäßen Material hergestellten Elektroden, was auch aus den nachfolgenden Tabellen 2 und 3 hervorgeht.

**Tabelle 2 - Auswertung des Zyklovoltammogramms in Fig. 5**

| **Zyklus Nr.** | **Spezifische Ladekapazität (mAh*g⁻¹)** | **Spezifische Entladekapazität (mAh*g⁻¹)** | **Effizienz (%)** |
|---|---|---|---|
| 1 | 2249,32 | 1327,19 | 59 |
| 2 | 1079,92 | 841,53 | 78 |
| 3 | 660,52 | 525,96 | 80 |

**Tabelle 3 - Auswertung des Zyklovoltammogramms in Fig. 6**

| **Zyklus Nr.** | **Spezifische Ladekapazität (mAh*g⁻¹)** | **Spezifische Entladekapazität (mAh*g⁻¹)** | **Effizienz (%)** |
|---|---|---|---|
| 1 | 2974,35 | 2662,66 | 90 |
| 2 | 2825,32 | 2738,96 | 97 |
| 3 | 2804,55 | 2713,64 | 97 |

Darüber hinaus lässt sich durch einen direkten Vergleich der einzelnen Zyklen auch ableiten, dass Elektroden mit einem erfindungsgemäßen Material eine bessere Kinetik aufweisen.

## Patentansprüche

1. Material für eine Batterie oder einen Akkumulator, umfassend:
a) Kohlenstoff;
b) eine Legierung und/oder ein Gemisch aus Silicium mit zumindest einem der Elemente Natrium oder Kalium und optional zumindest einem weiteren metallischen Element sowie herstellungsbedingten Verunreinigungen, wobei im Falle eines Gemisches die Elemente innerhalb einer Siliciumphase verteilt sind;
c) einen Binder, der Kohlenstoff und die Legierung und/oder das Gemisch zu einem festen Material bindet.

2. Material nach Anspruch 1, wobei Natrium und/oder Kalium in der Legierung und/oder dem Gemisch in einem Anteil von weniger als 50 Gew.-% vorliegt.

3. Material nach einem der Ansprüche 1 oder 2, wobei Natrium und/oder Kalium in der Legierung und/oder dem Gemisch in einem Anteil von weniger als 40 Gew.-% vorliegt.

4. Material nach einem der Ansprüche 1 bis 3, wobei Natrium und/oder Kalium in der Legierung und/oder dem Gemisch in einem Anteil von weniger als 25 Gew.-% vorliegt.

5. Material nach einem der Ansprüche 1 bis 4, wobei Natrium und/oder Kalium in der Legierung und/oder dem Gemisch in einem Anteil von weniger als 10 Gew.-% vorliegt.

6. Material nach einem der Ansprüche 1 bis 5, wobei Natrium und/oder Kalium in der Legierung und/oder dem Gemisch in einem Anteil von weniger als 5 Gew.-% vorliegt.

7. Material nach einem der Ansprüche 1 bis 6, wobei Natrium und/oder Kalium in der Legierung und/oder dem Gemisch in einem Anteil von weniger als 1,0 Gew.-% vorliegt.

8. Material nach einem der Ansprüche 1 bis 7, wobei die Legierung und/oder das Gemisch in Form von Partikeln vorliegt.

9. Material nach Anspruch 8, wobei die Partikel eine durchschnittliche Partikelgröße von weniger als 500 nm aufweisen.

10. Material nach Anspruch 8 oder 9, wobei die Partikel eine durchschnittliche Partikelgröße von weniger als 200 nm aufweisen.

11. Material nach einem der Ansprüche 1 bis 10, wobei ein Kohlenstoffanteil bis zu 95 Gew.-% beträgt.

12. Material nach einem der Ansprüche 1 bis 11, wobei der Kohlenstoff als Grafit oder in einer von einer Grafitstruktur abweichenden Form vorliegt.

13. Material nach einem der Ansprüche 1 bis 12, wobei ein Binderanteil weniger als 20 Gew.-% beträgt.

14. Material nach einem der Ansprüche 1 bis 13, wobei der Binder ein Polysaccharid und/oder ein Styrol-Butadien-Kautschuk ist.

15. Material nach Anspruch 14, wobei der Binder Natriumcarboxymethylcellulose umfasst oder aus dieser besteht.

16. Verwendung eines Materials nach einem der Ansprüche 1 bis 15 als Elektrodenmaterial in Lithium-Ionen-Sekundärbatterien.

17. Elektrode, insbesondere negative Elektrode einer Lithium-Ionen-Sekundärbatterie, umfassend ein Material nach einem der Ansprüche 1 bis 15.

18. Batterie oder Akkumulator, umfassend eine Elektrode mit einem Material nach einem der Ansprüche 1 bis 15.

19. Verfahren zur Herstellung eines Materials für eine Batterie oder einen Akkumulator, nach einem der Ansprüche 1 bis 15, umfassend folgende Schritte:
a) Bereitstellung von Kohlenstoff;
b) Bereitstellung einer Legierung und/oder eines Gemisches aus Silicium mit zumindest einem der Elemente Natrium oder Kalium und optional zumindest einem weiteren metallischen Element sowie herstellungsbedingten Verunreinigungen, wobei im Falle eines Gemisches die Elemente innerhalb einer Siliciumphase verteilt sind;
c) Bereitstellung eines Binders, der Kohlenstoff und die Legierung und/oder das Gemisch zu einem festen Material bindet;
d) Vermengen der gemäß den Schritten a) bis c) bereitgestellten Komponenten und optional thermisches und/oder mechanisches Behandeln, um das Material in fester Form zu bilden.

20. Verfahren nach Anspruch 19, wobei Partikel aus Silicium mit einer durchschnittlichen Partikelgröße von weniger als 500 nm mit zumindest einem der Elemente Natrium oder Kalium behandelt werden, um die Legierung und/oder das Gemisch bereitzustellen.

21. Verfahren nach Anspruch 19 oder 20, wobei Partikel aus Silicium mit einer durchschnittlichen Partikelgröße von weniger als 200 nm mit zumindest einem der Elemente Natrium oder Kalium behandelt werden, um die Legierung und/oder das Gemisch bereitzustellen.

22. Verfahren nach einem der Ansprüche 19 bis 21, wobei die Legierung und/oder das Gemisch durch Umsetzen von festem Silicium mit zumindest einem der bei Umsetzungstemperatur in flüssiger Form vorliegenden Elemente Natrium oder Kalium erstellt wird.

23. Verfahren nach einem der Ansprüche 19 bis 21, wobei die Legierung und/oder das Gemisch durch Umsetzen von festem Silicium mit zumindest einem der bei Umsetzungstemperatur gasförmig vorliegenden Elemente Natrium oder Kalium erstellt wird.

24. Verfahren nach einem der Ansprüche 19 bis 23, wobei die Legierung und/oder das Gemisch mit einem Anteil zumindest eines der Elemente Natrium oder Kalium von weniger als 5 Gew.-% erstellt wird.

25. Verfahren nach einem der Ansprüche 19 bis 24, wobei das Material mit einem Kohlenstoffanteil von bis zu 95 Gew.-% erstellt wird.

26. Verfahren nach einem der Ansprüche 19 bis 25, wobei als Binder ein Polysaccharid und/oder ein Styrol-Butadien-Kautschuk eingesetzt wird.

27. Verfahren nach Anspruch 26, wobei ein Binderanteil auf weniger als 20 Gew.-% eingestellt wird.

28. Verfahren nach Anspruch 26 oder 27, wobei Schritt d) in wässriger Phase durchgeführt wird.

29. Verfahren zur Herstellung einer Batterie oder eines Akkumulators, umfassend ein Verfahren nach einem der Ansprüche 19 bis 28.

## Claims

1. Material for a battery or an accumulator, comprising:
a) carbon;
b) an alloy and/or a mixture of silicon with at least one of the elements sodium or potassium and optionally at least one further metallic element and production-related impurities, wherein in the case of a mixture the elements are distributed within a silicon phase;
c) a binder which binds carbon and the alloy and/or the mixture to give a solid material.

2. Material according to claim 1, wherein sodium and/or potassium is present in the alloy and/or the mixture in an amount of less than 50 wt.%.

3. Material according to one of claims 1 or 2, wherein sodium and/or potassium is present in the alloy and/or the mixture in an amount of less than 40 wt.%.

4. Material according to one of claims 1 to 3, wherein sodium and/or potassium is present in the alloy and/or the mixture in an amount of less than 25 wt.%.

5. Material according to one of claims 1 to 4, wherein sodium and/or potassium is present in the alloy and/or the mixture in an amount of less than 10 wt.%.

6. Material according to one of claims 1 to 5, wherein sodium and/or potassium is present in the alloy and/or the mixture in an amount of less than 5 wt.%.

7. Material according to one of claims 1 to 6, wherein sodium and/or potassium is present in the alloy and/or the mixture in an amount of less than 1.0 wt.%.

8. Material according to one of claims 1 to 7, wherein the alloy and/or the mixture is present in the form of particles.

9. Material according to claim 8, wherein the particles have an average particle size of less than 500 nm.

10. Material according to claim 8 or 9, wherein the particles have an average particle size of less than 200 nm.

11. Material according to one of claims 1 to 10, wherein a carbon content is up to 95 wt.%.

12. Material according to one of claims 1 to 11, wherein the carbon is present as graphite or in a form which deviates from a graphite structure.

13. Material according to one of claims 1 to 12, wherein a binder content is less than 20 wt.%.

14. Material according to one of claims 1 to 13, wherein the binder is a polysaccharide and/or a styrene/butadiene rubber.

15. Material according to claim 14, wherein the binder comprises sodium carboxymethylcellulose or consists of this.

16. Use of a material according to one of claims 1 to 15 as an electrode material in lithium ion secondary batteries.

17. Electrode, in particular negative electrode of a lithium ion secondary battery, comprising a material according to one of claims 1 to 15.

18. Battery or accumulator, comprising an electrode with a material according to one of claims 1 to 15.

19. Method for producing a material for a battery or an accumulator, according to one of claims 1 to 15, comprising the following steps:
a) providing carbon;
b) providing an alloy and/or a mixture of silicon with at least one of the elements sodium or potassium and optionally at least one further metallic element and production-related impurities, wherein in the case of a mixture the elements are distributed within a silicon phase;
c) providing a binder which binds carbon and the alloy and/or the mixture to give a solid material;
d) mixing the components provided according to steps a) to c) and optionally thermal and/or mechanical treatment, in order to form the material in a solid form.

20. Method according to claim 19, wherein particles of silicon with an average particle size of less than 500 nm are treated with at least one of the elements sodium or potassium in order to provide the alloy and/or the mixture.

21. Method according to claim 19 or 20, wherein particles of silicon with an average particle size of less than 200 nm are treated with at least one of the elements sodium or potassium in order to provide the alloy and/or the mixture.

22. Method according to one of claims 19 to 21, wherein the alloy and/or the mixture is produced by reacting solid silicon with at least one of the elements sodium or potassium present in liquid form at the reaction temperature.

23. Method according to one of claims 19 to 21, wherein the alloy and/or the mixture is produced by reacting solid silicon with at least one of the elements sodium or potassium present in gaseous form at the reaction temperature.

24. Method according to one of claims 19 to 23, wherein the alloy and/or the mixture is produced with a content of at least one of the elements sodium or potassium of less than 5 wt.%.

25. Method according to one of claims 19 to 24, wherein the material is produced with a carbon content of up to 95 wt.%.

26. Method according to one of claims 19 to 25, wherein a polysaccharide and/or a styrene/butadiene rubber is employed as the binder.

27. Method according to claim 26, wherein a binder content is adjusted to less than 20 wt.%.

28. Method according to claim 26 or 27, wherein step d) is carried out in the aqueous phase.

29. Method for producing a battery or an accumulator, comprising a method according to one of claims 19 to 28.

## Revendications

1. Matériau pour une batterie ou un accumulateur, comprenant :
a) du carbone ;
b) un alliage et/ou un mélange de silicium avec au moins un des éléments sodium ou potassium et éventuellement au moins un autre élément métallique ainsi que des impuretés conditionnées par la fabrication, où, dans le cas d'un mélange, les éléments sont répartis à l'intérieur d'une phase de silicium ;
c) un liant, qui lie le carbone et l'alliage et/ou le mélange pour donner un matériau solide.

2. Matériau selon la revendication 1, dans lequel le sodium et/ou le potassium est présent dans l'alliage et/ou le mélange en une proportion inférieure à 50 % en poids.

3. Matériau selon l'une des revendications 1 et 2, dans lequel le sodium et/ou le potassium est présent dans l'alliage et/ou le mélange en une proportion inférieure à 40 % en poids.

4. Matériau selon l'une des revendications 1 à 3, dans lequel le sodium et/ou le potassium est présent dans l'alliage et/ou le mélange en une proportion inférieure à 25 % en poids.

5. Matériau selon l'une des revendications 1 à 4, dans lequel le sodium et/ou le potassium est présent dans l'alliage et/ou le mélange en une proportion inférieure à 10 % en poids.

6. Matériau selon l'une des revendications 1 à 5, dans lequel le sodium et/ou le potassium est présent dans l'alliage et/ou le mélange en une proportion inférieure à 5 % en poids.

7. Matériau selon l'une des revendications 1 à 6, dans lequel le sodium et/ou le potassium est présent dans l'alliage et/ou le mélange en une proportion inférieure à 1,0 % en poids.

8. Matériau selon l'une des revendications 1 à 7, dans lequel l'alliage et/ou le mélange se présente sous forme de particules.

9. Matériau selon la revendication 8, dans lequel les particules présentent une taille moyenne de particules inférieure à 500 nm.

10. Matériau selon la revendication 8 ou 9, dans lequel les particules présentent une taille moyenne de particules inférieure à 200 nm.

11. Matériau selon l'une des revendications 1 à 10, dans lequel une proportion de carbone atteint jusqu'à 95 % en poids.

12. Matériau selon l'une des revendications 1 à 11, dans lequel le carbone se présente sous forme de graphite ou sous une forme divergeant d'une structure en graphite.

13. Matériau selon l'une des revendications 1 à 12, dans lequel une proportion de liant est inférieure à 20 % en poids.

14. Matériau selon l'une des revendications 1 à 13, dans lequel le liant est un polysaccharide et/ou un caoutchouc de styrène-butadiène.

15. Matériau selon la revendication 14, dans lequel le liant comprend de la carboxyméthylcellulose sodique ou se compose de celle-ci.

16. Utilisation d'un matériau selon l'une des revendications 1 à 15 comme matériau d'électrodes dans des batteries secondaires au lithium-ion.

17. Électrode, en particulier électrode négative d'une batterie secondaire au lithium-ion, comprenant un matériau selon l'une des revendications 1 à 15.

18. Batterie ou accumulateur comprenant une électrode ayant un matériau selon l'une des revendications 1 à 15.

19. Procédé de fabrication d'un matériau pour une batterie ou un accumulateur, selon l'une des revendications 1 à 15, comprenant les étapes suivantes de :
a) préparation du carbone ;
b) préparation d'un alliage et/ou d'un mélange de silicium avec au moins un des éléments sodium ou potassium et éventuellement au moins un autre élément métallique ainsi que des impuretés conditionnées par la fabrication, où, dans le cas d'un mélange, les éléments sont répartis à l'intérieur d'une phase de silicium ;
c) préparation d'un liant, qui lie le carbone et l'alliage et/ou le mélange pour donner un matériau solide ;
d) mélange des composants préparés selon les étapes a) à c) et traitement thermique et/ou mécanique éventuel pour former le matériau sous une forme solide.

20. Procédé selon la revendication 19, dans lequel des particules de silicium ayant une taille moyenne de particules inférieure à 500 nm sont traitées avec au moins un des éléments sodium ou potassium pour préparer l'alliage et/ou le mélange.

21. Procédé selon la revendication 19 ou 20, dans lequel des particules de silicium ayant une taille moyenne de particules inférieure à 200 nm sont traitées avec au moins un des éléments sodium ou potassium pour préparer l'alliage et/ou le mélange.

22. Procédé selon l'une des revendications 19 à 21, dans lequel l'alliage et/ou le mélange est élaboré par conversion du silicium solide avec au moins un des éléments sodium ou potassium se présentant sous une forme liquide à la température de conversion.

23. Procédé selon l'une des revendications 19 à 21, dans lequel l'alliage et/ou le mélange est élaboré par conversion du silicium solide avec au moins un des éléments sodium ou potassium se présentant sous une forme gazeuse à la température de conversion.

24. Procédé selon l'une des revendications 19 à 23, dans lequel l'alliage et/ou le mélange est élaboré avec une proportion d'au moins l'un des éléments sodium ou potassium inférieure à 5 % en poids.

25. Procédé selon l'une des revendications 19 à 24, dans lequel le matériau est élaboré avec une proportion de carbone allant jusqu'à 95 % en poids.

26. Procédé selon l'une des revendications 19 à 25, dans lequel il est mis en oeuvre comme liant un polysaccharide et/ou un caoutchouc de styrène-butadiène.

27. Procédé selon la revendication 26, dans lequel une proportion de liant est ajustée à moins de 20 % en poids.

28. Procédé selon la revendication 26 ou 27, dans lequel l'étape d) est réalisée en phase aqueuse.

29. Procédé de fabrication d'une batterie ou d'un accumulateur, comprenant un procédé selon l'une des revendications 19 à 28.
